# EUROPEAN PATENT APPLICATION

(11) **EP 0 835 739 A2**
(43) Date of publication of application: **15.04.1998**
(21) Application number: 97306697.0
(22) Date of filing: 01.09.1997
(51) Int. Cl.: B29C 63/02, B32B 31/00

(54) **System for coating information recording media**

(30) Priority: 30.08.1996 JP 248670/96
(71) Applicant: NISCA CORPORATION, Minamikoma-gun, Yamanashi-ken (JP)
(72) Inventor: Kobayashi, Takehito, Nirasaki-shi, Yamanashi-ken, (JP)
(74) Representative: Skone James, Robert Edmund

(57) **Abstract**

A coating system enables protective coating on both the recording surfaces of a recording medium (C) such as identification cards, license cards, and credit cards by use of a single coating unit (20) capable of coating only one surface of the card-like recording medium. Upon coating one recording surface of the medium with protective films (F) at a coating position (X), the recording medium is turned over by operating transporting-turning means (11,11a,11b) and again sent to the coating position (X), so that the other surface is coated there. The system may incorporate a printing unit (80) for printing the recording medium or be attached to an individual printer.

## Description

This invention relates to a system for coating at least one recording surface of information recording media such as identification cards with protective films, and more particularly to a coating system capable of effectively coating both surfaces of the card or the like by use of a single coating unit having a function of coating one surface of the recording medium.

Various information recording media such as license cards, credit cards and identification cards are usually printed with visible information such as characters and marks and images expressing personal data and other information data and a photograph of a card holder. Such information may be optically or magnetically recorded on the recording media as well. In order to protect the recording surface, the recording surface of the card is coated with a protective film.

As the protective film to be applied to the card, a transparent hot-melt plastic film or a reinforced plastic film with a hot-melt adhesive layer is used. When occasion demands, a protective film with a hologram pattern is often adopted for preventing the card from being falsely altered.

By heating the hot-melt protective film being in press contact with the recording surface of the card, the film is thermally transferred to the recording surface, thus to form protective coating on the card.

In a case of using a plastic card as the recording medium and printing visible information on the card with a printer, it may be considered to provide the printer with a coating function or attach an individual coating device to the printer. In either case, the protective film formed in a strip or ribbon is forwarded at the same speed as that at which the card moves and heated to be thermally transferred to the card. Thus, the coating device has need of at least one unit including card forwarding means, protective film supplying means, and protective film heating means. When both the recording surfaces of the card have to be coated with the protective films, two sets of coating units having the complex means as noted above are necessary for coating the obverse and back of the card at one time.

For example, a coating device disclosed in Japanese Patent Application Public Disclosure No. HEI 3-110127 employs two individual coating units symmetrically opposite to each other astride a sheet passage along which a sheet or card to be coated is forwarded, so as to respectively coat the obverse and back surfaces of the sheet with coating films. Each coating unit in this conventional coating device comprises film rolls, film supplying means, a heater and driving means.

Installation of two sets of coating units for simultaneously coating both the surfaces of the card adds to the size and complexity of the coating device and renders the handling of the device difficult. Besides, large rated power load is required for simultaneously driving two sets of heating mechanisms for thermally transferring the coating films to both the surfaces of the card. As a result, it is a matter of course that the cost of the coating device increases.

It has been considered to use a card turning or reversing mechanism for turning a card upside down to coat both the surfaces of the card by use of a single coating unit. However, there has not existed means capable of efficiently turning the card. Although a device for reversing an information recording card is found in U.S. Patent No. 5,326,179 disclosing an apparatus for printing information on the card, the reversing device comprises a turntable, gears, rollers, a motor for rotating the turntable and a motor for rotating the rollers. Since the turntable carrys the motor for rotating the rollers, the rotation of the turntable becomes dull, so that the operation speed of the card printer cannot be increased. Furthermore, the turning device in this conventional device is difficult to not only apply to a coating system for coating both the surfaces of the card with ease, but also rationally fulfill functions necessary for coating the card.

An object of the present invention is to provide a system capable of automatically coating both the recording surfaces of information recording media of various types such as identification cards and credit cards with protective films by use of a single coating unit with high efficiency. Another object of the invention is to provide a coating system incorporating an information recording medium transport unit having a function of efficiently transporting and turning over the recording medium so as to rationally coat both the surfaces of the recording medium by using a single coating unit, and automatically pick out and reject a fault medium. Still another object of the invention is to provide a coating system including a medium turning means which can be composed simply and efficiently operated without degrading its operating performance, so as to coat both the surfaces of the recording medium with protective films accurately without causing position error in coating, thus producing a high-quality and safe information recording medium coated with the protective film. Yet another object of the invention is to provide a serviceable coating system having a single coating unit capable of being directly or indirectly joined to a recording unit such as a printer and various information processing devices including a ticketing machine, so as to sequentially produce a desired recording medium storing information data and coated with the protective film from a blank medium.

To attain the objects described above according to the present invention, there is provided a coating system for information recording media, which comprises a medium supplying unit for supplying recording media, one coating unit for coating one surface of the recording medium given from the medium supplying unit with a protective film, and a transport unit including at least one means for transporting and turning over the recording medium. The transport unit may be positioned before or behind the coating unit.

Plastic cards as the recording medium to be coated may be dealt with by the coating system of the invention. In a case of dealing with the card printed with visible information such as characters and image patterns, the medium supplying unit may be formed of a card supplying stacker for supplying the printed cards to the coating unit one by one. As the medium supplying unit, a printer may be used for printing the information such as characters and images on a blank recording card, so that the card upon being printed by the printer is forwarded to the coating unit.

The coating unit includes heating means for thermally transferring the hot-melt protective film to the card, means for supplying the protective film relative to the card, and driving means for the heating means and film supplying means.

The transporting-turning means in the transport unit comprises transfer rollers for holding and forwarding the card, a rotary frame supporting the transfer rollers, roller driving means for rotating the transfer rollers to forward the card along a card passage, and frame driving means for revolving the rotary frame to turn the card upside down. The roller driving means and frame driving means are separated from the rotary frame, so that the rotary frame can be operated without decreasing its rotational performance. By revolving the transporting-turning means, the direction of forwarding the card held by the transporting-turning means is changed arbitrarily, so that the card can be fed to the coating unit or other processing portions.

To a medium discharge portion, the finished card with both the surfaces coated with the protective films are sent out. The system may further be provided with a reject portion to which a fault card, if any, is discharged.

The present invention will become more fully understood from the detailed description given hereinbelow and the accompanying drawings which are given by way of illustration only, and thus are not limitative of the present invention, in which:-

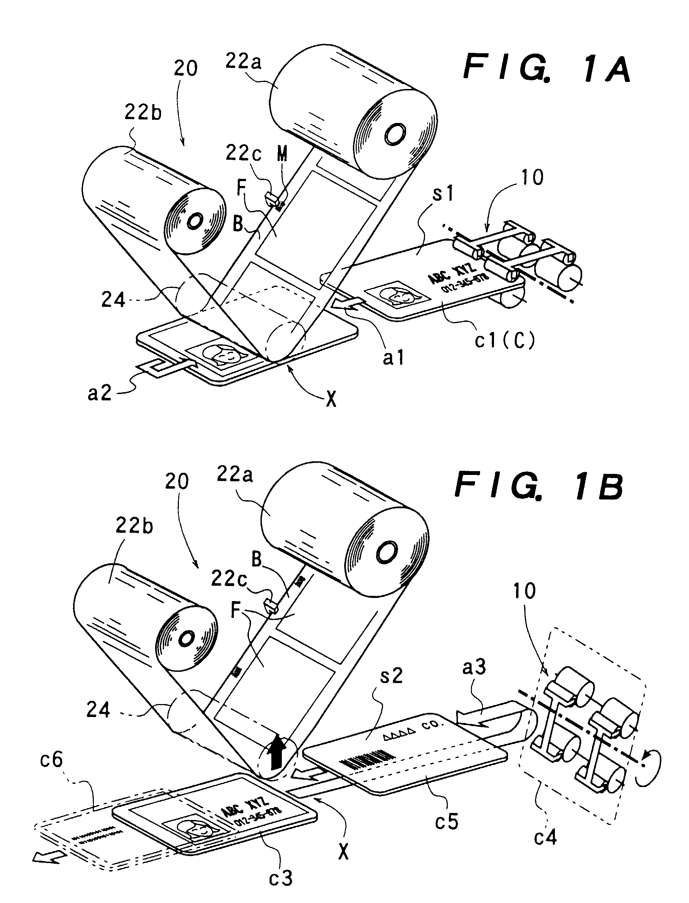

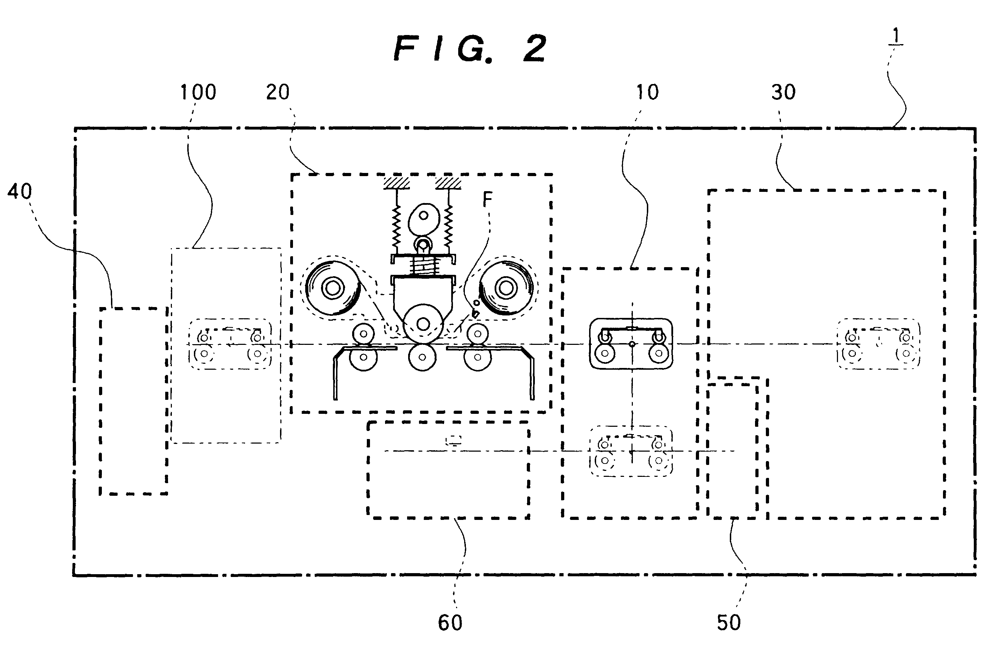

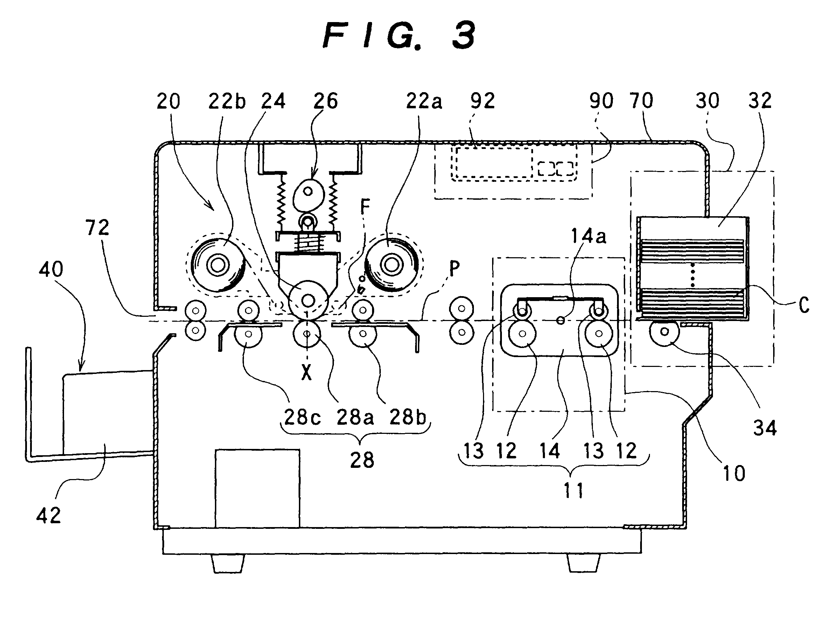

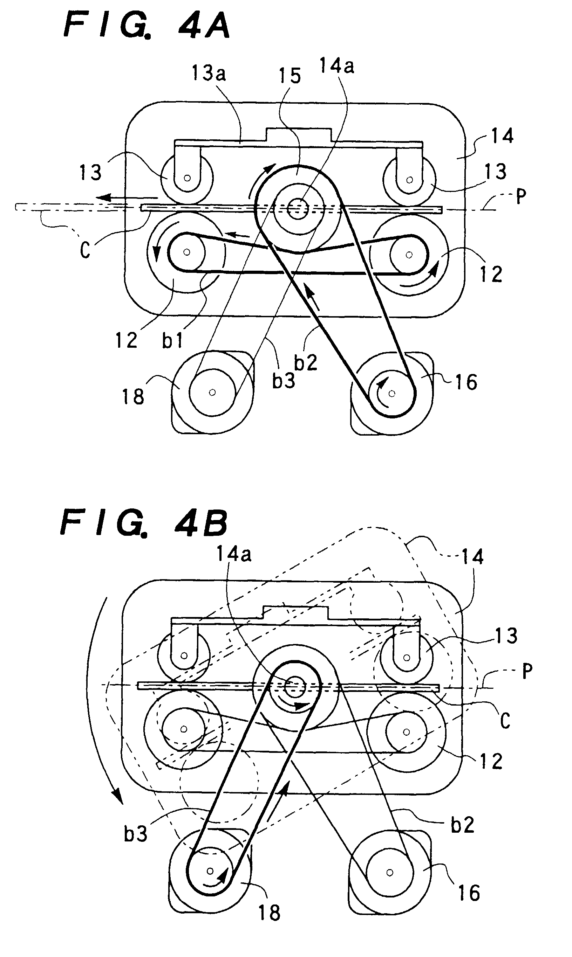

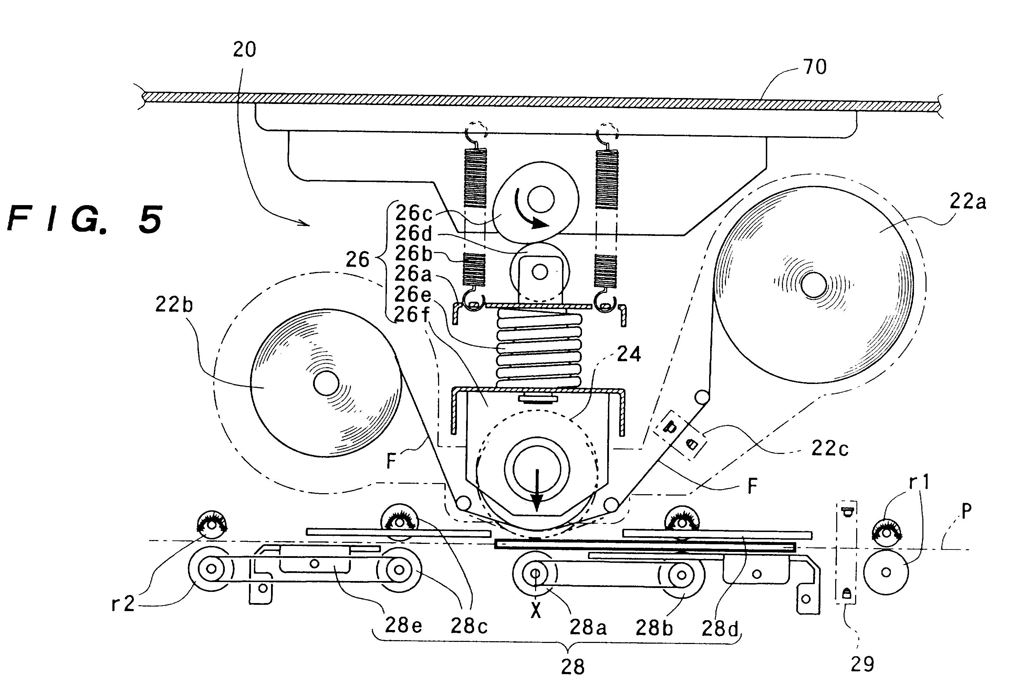

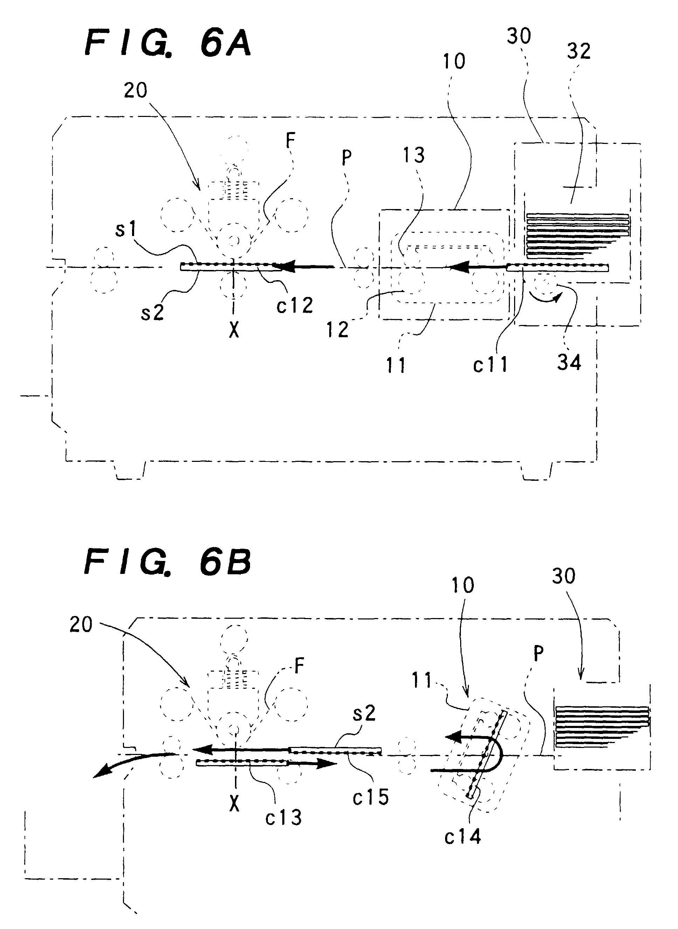

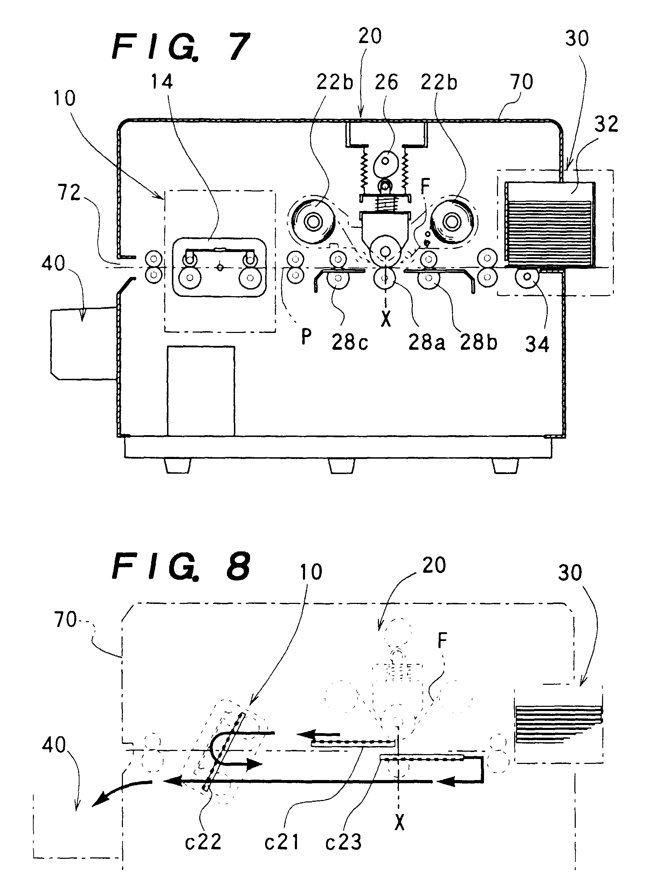

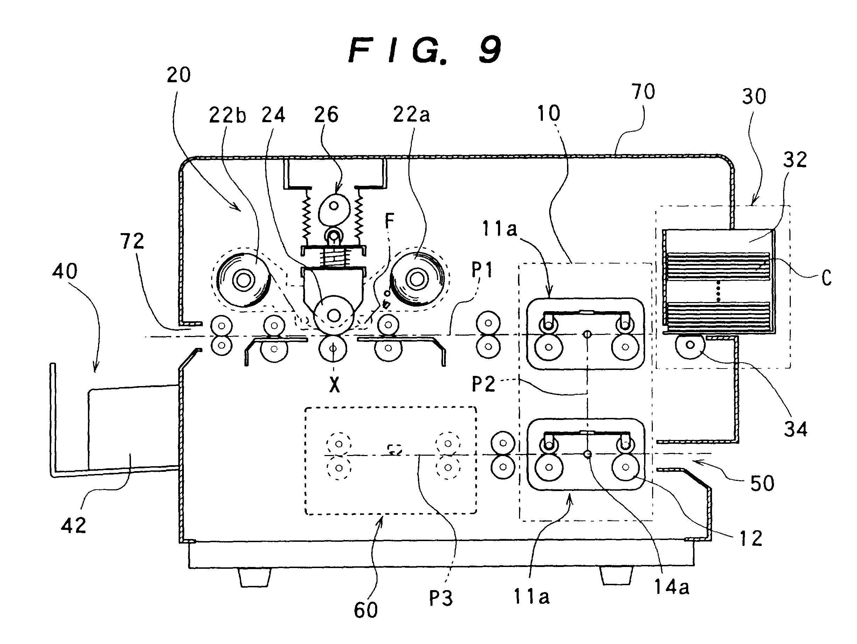

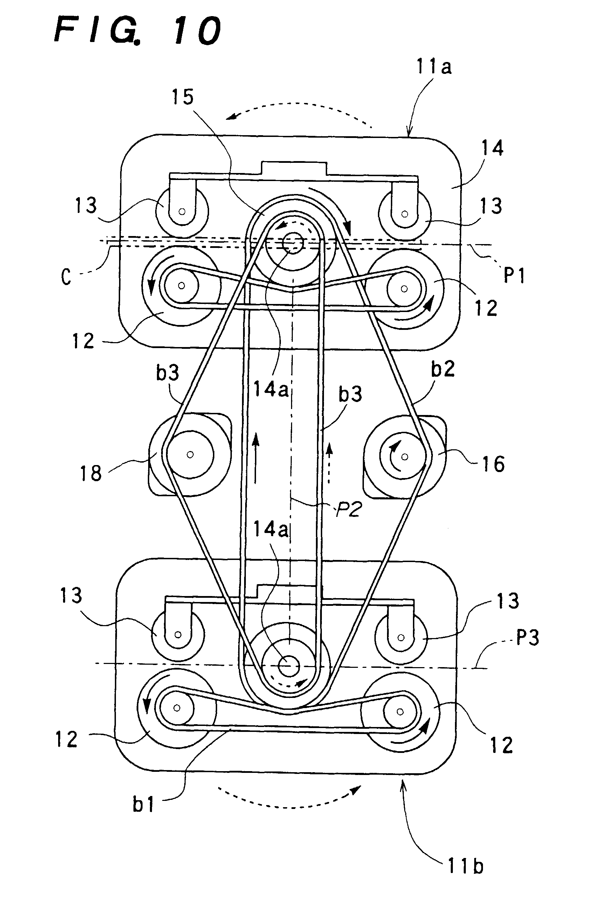

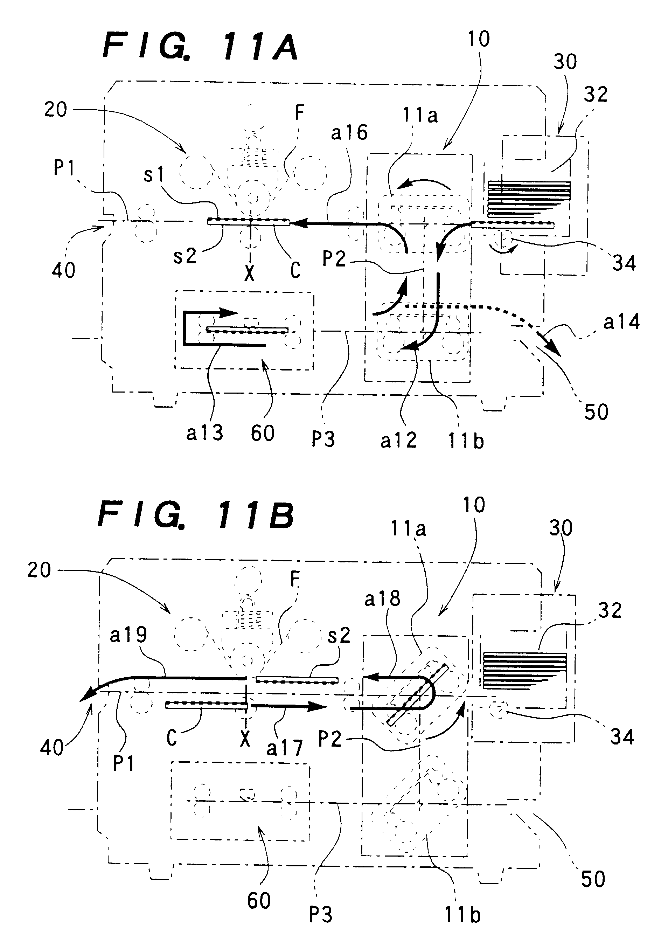

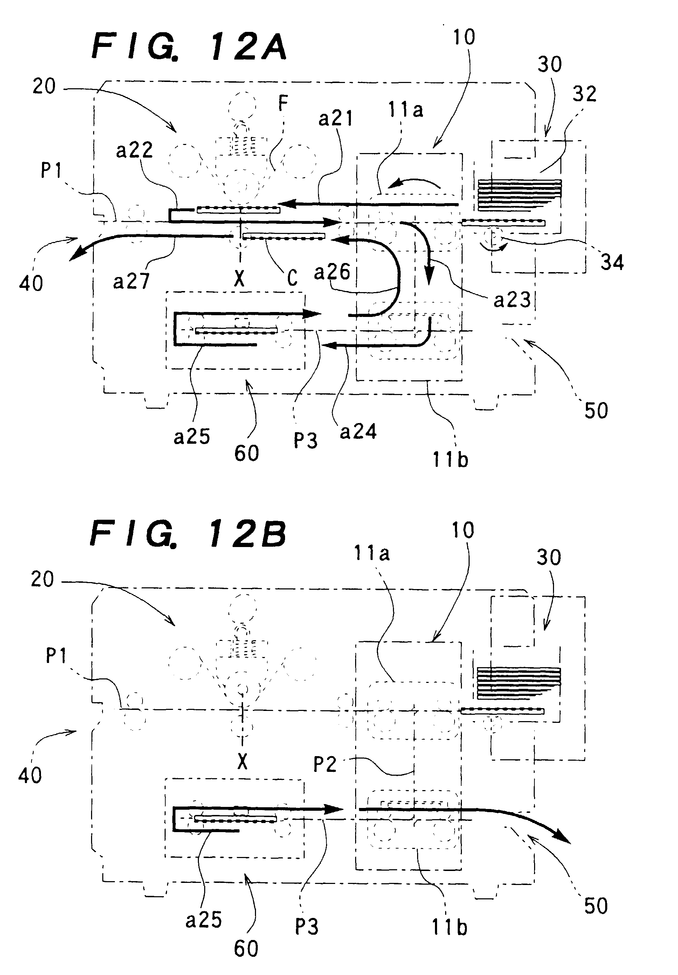

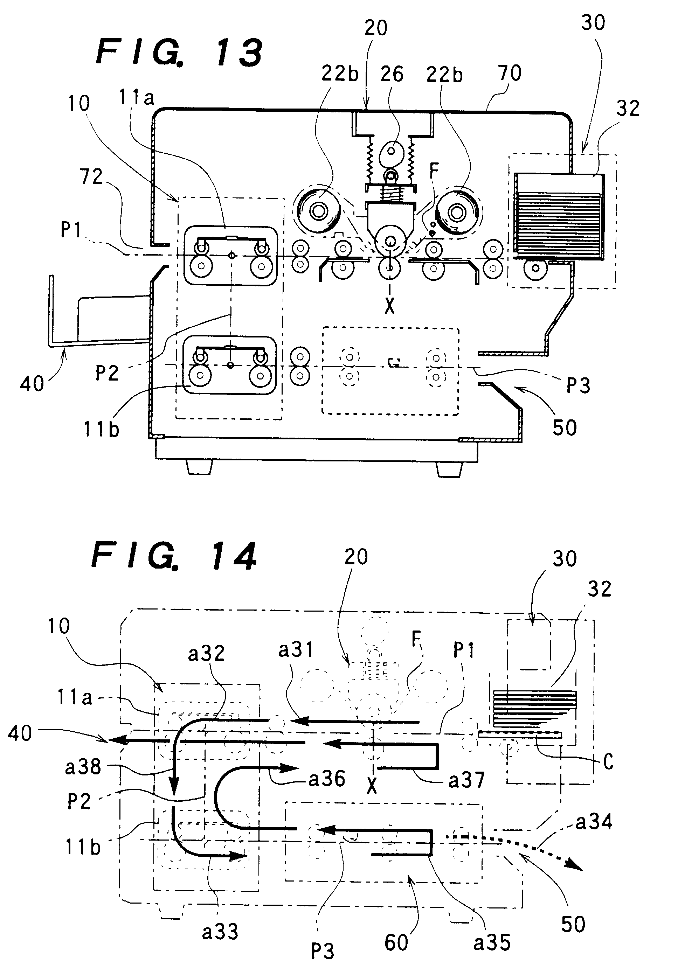

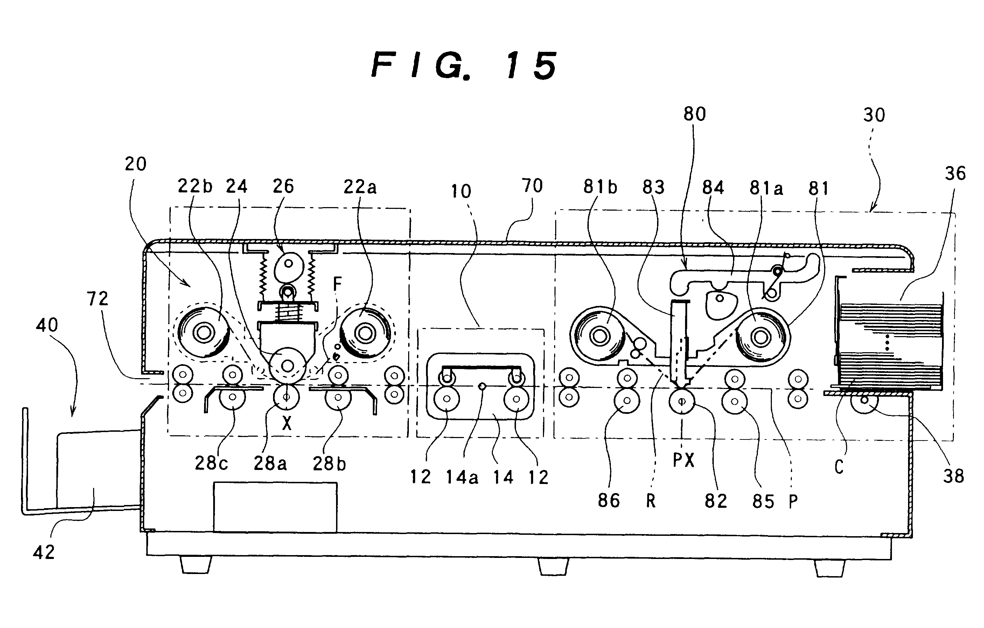

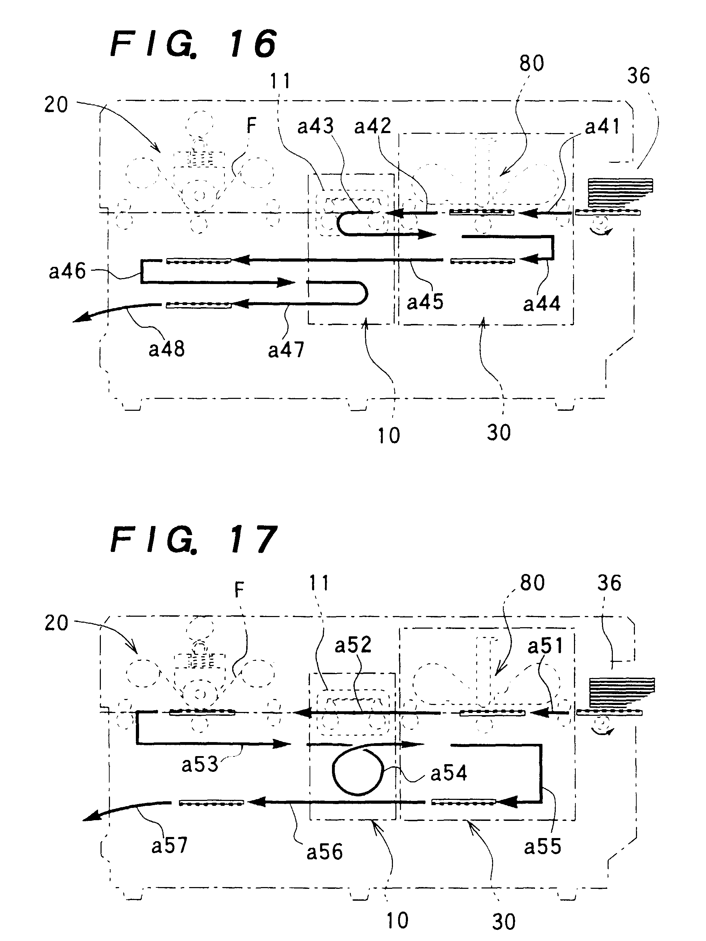

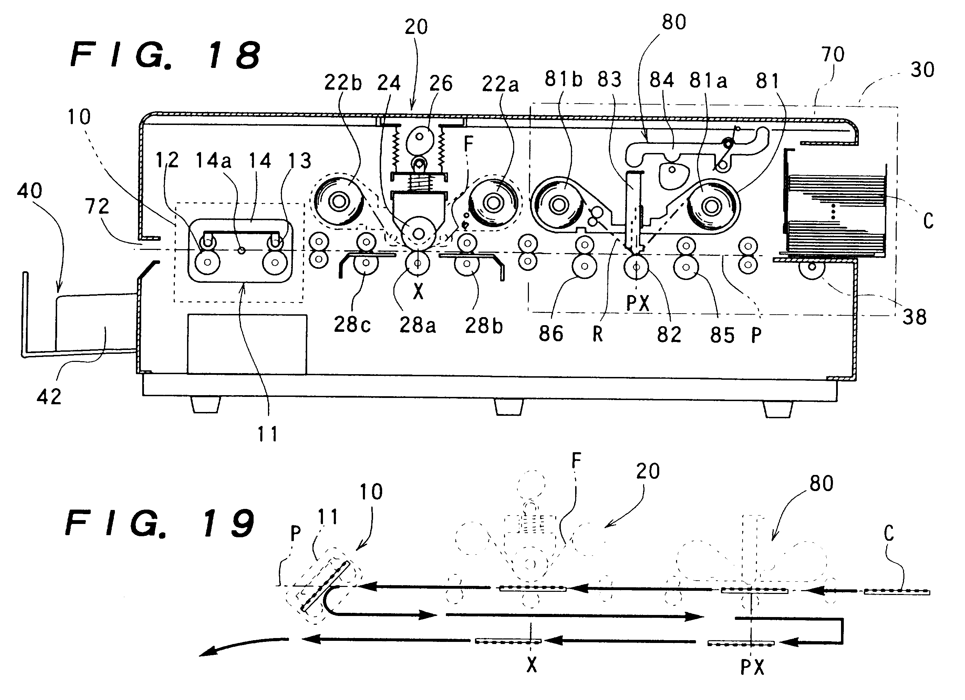

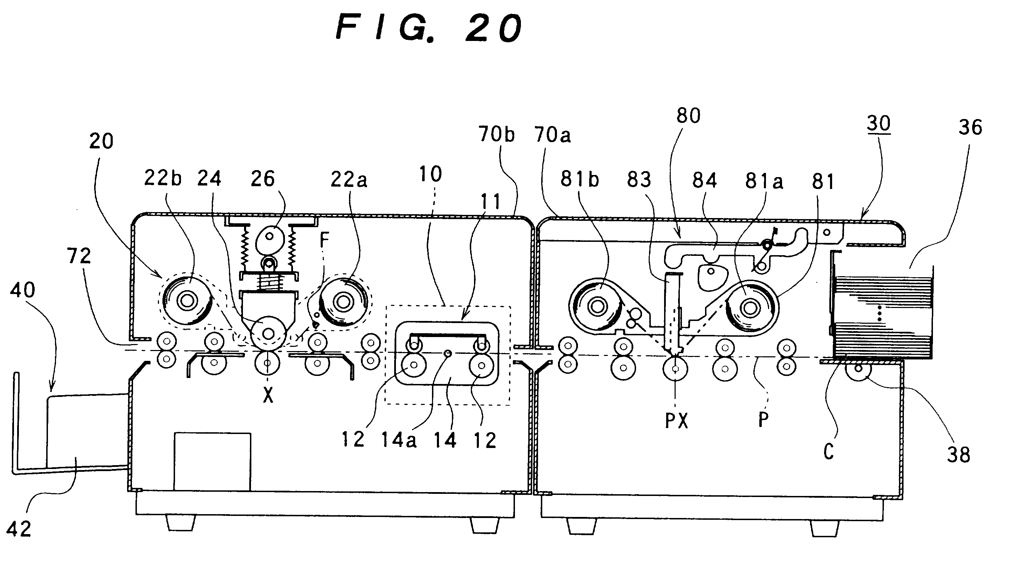

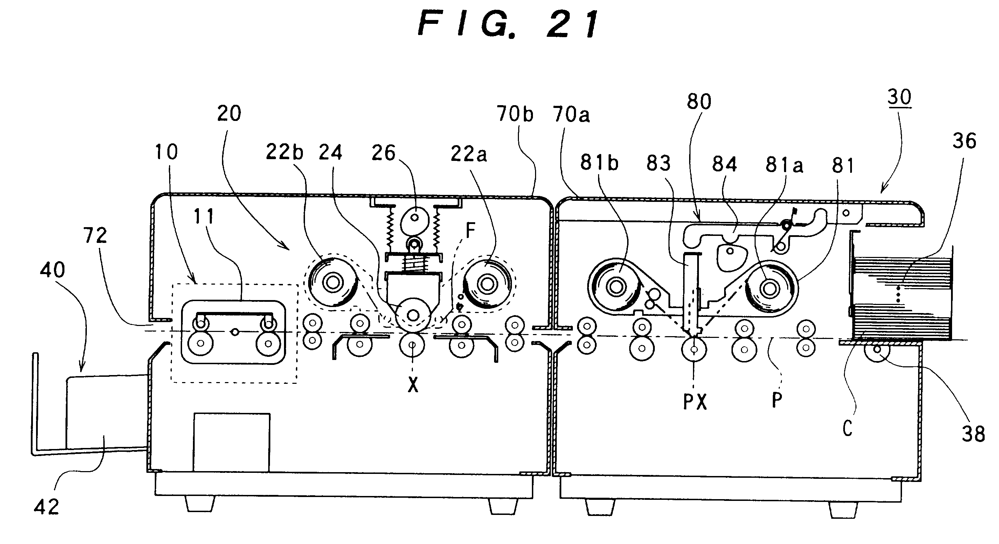

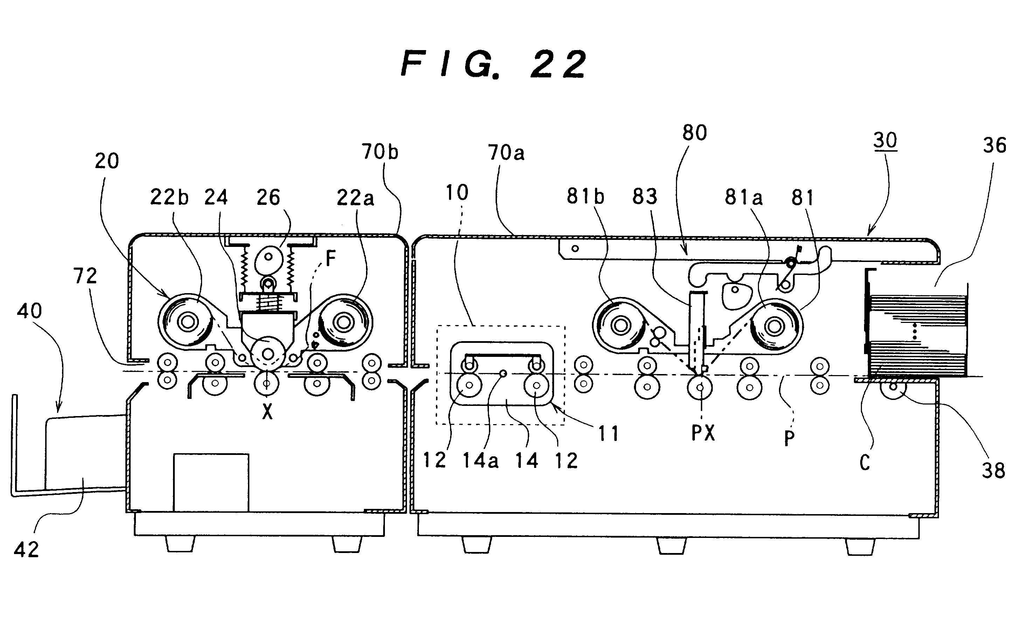

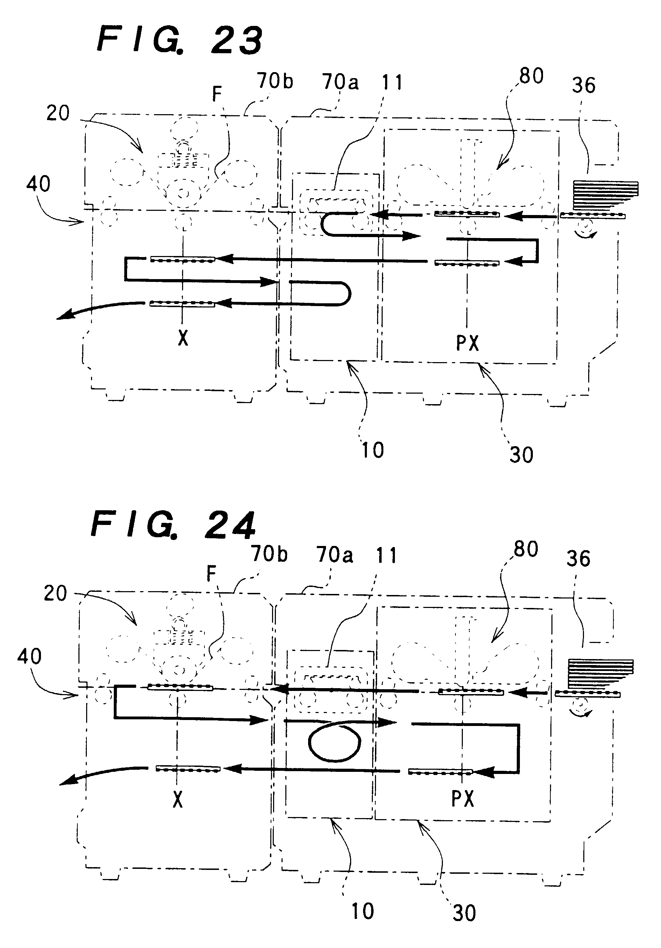

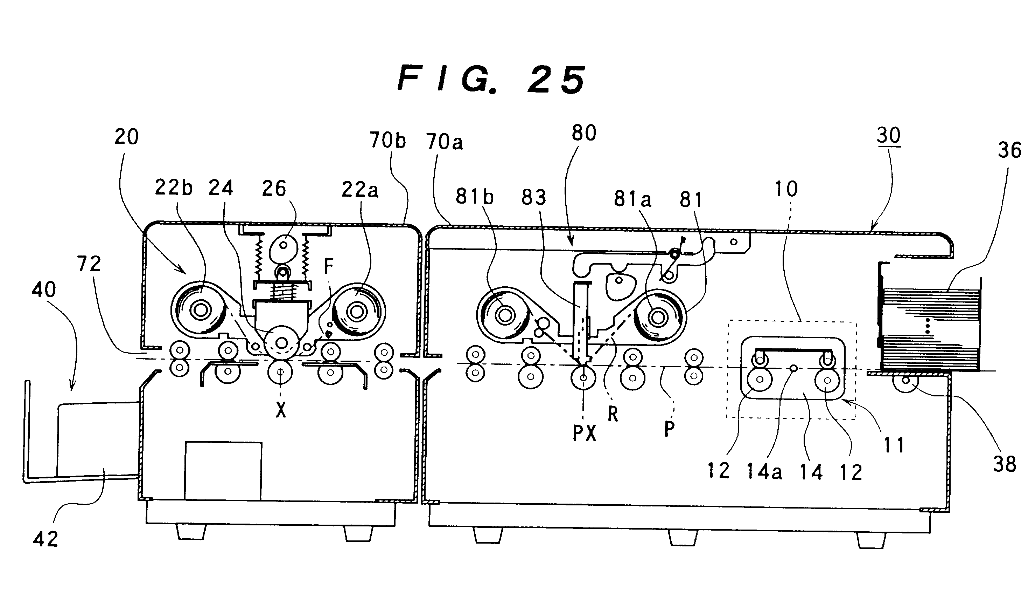

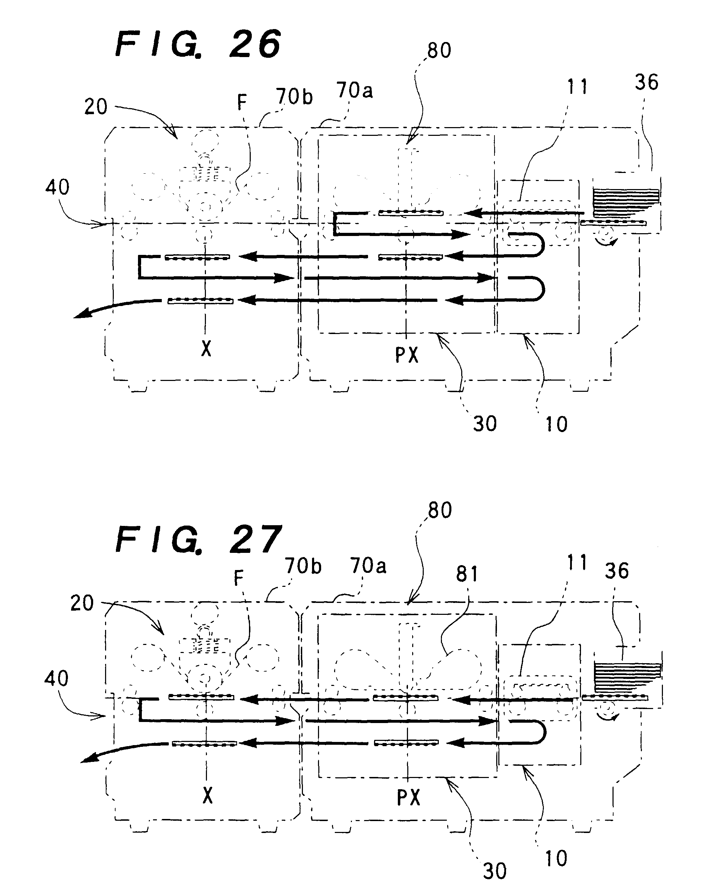

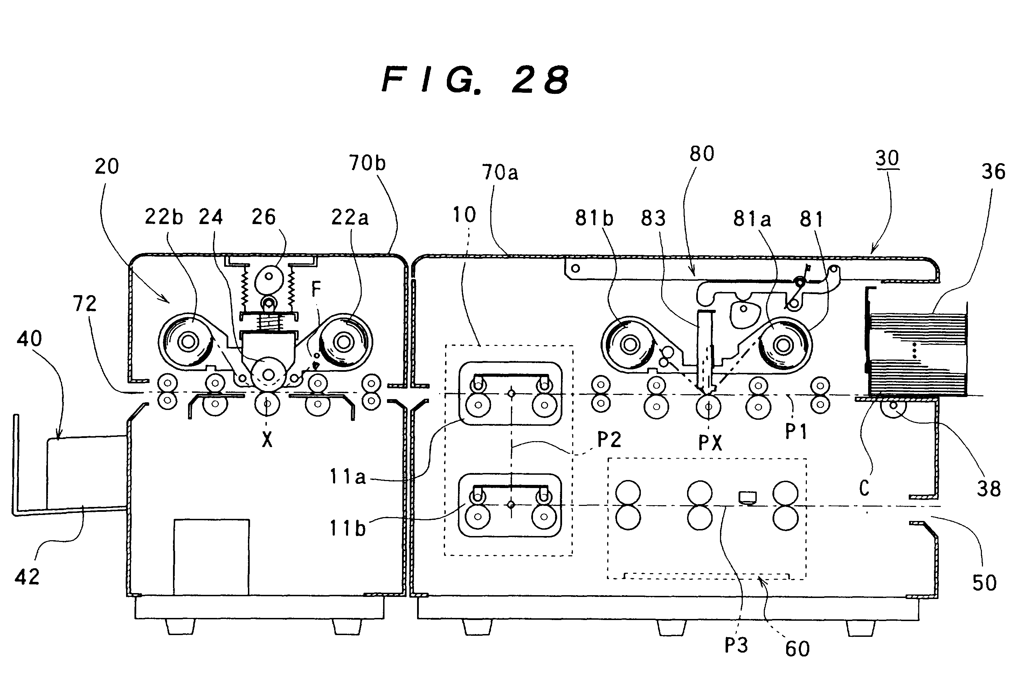

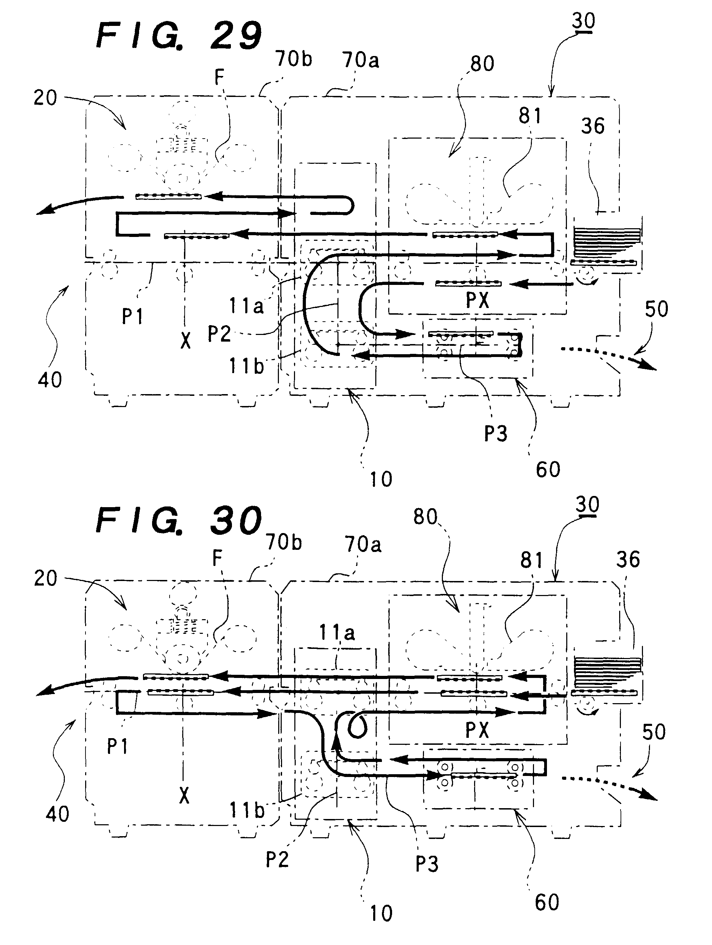

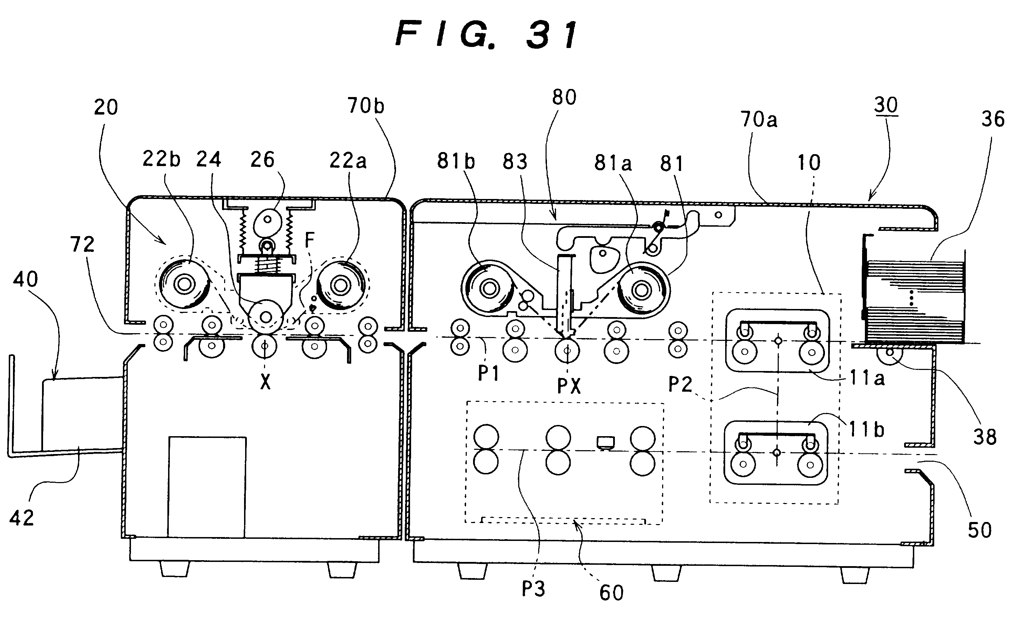

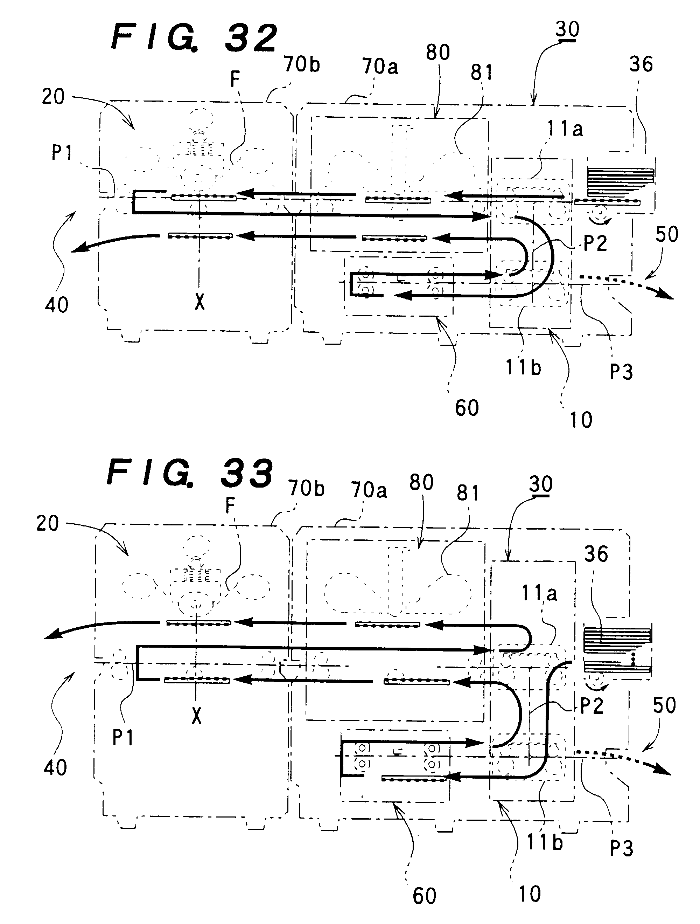

FIG. 1A and FIG. 1B are schematic perspective views showing one example of coating the obverse and back of an information recording medium with protective films by use of a coating system according to the present invention; FIG. 2 is a conceptual block diagram showing the coating system of the invention; FIG. 3 is a side section schematically showing a first embodiment of the coating system of the invention; FIG. 4A and FIG. 4B are explanatory views schematically showing the turning operation of a transport unit in the coating system of the invention; FIG. 5 is a schematic side view showing one example of the coating unit of the system of the present invention; FIG. 6A and FIG. 6B are explanatory views showing the manner of coating the card by use of the system of the invention; FIG. 7 is a schematic side view of a second embodiment of the coating system of the invention; FIG. 8 is an explanatory view showing one example of the manner of coating the card by use of the system of FIG. 7; FIG. 9 is a schematic side view of a third embodiment of the coating system of the invention; FIG. 10 is an explanatory view schematically showing a transport unit in the system of FIG. 9; FIG. 11A and FIG. 11B are explanatory views showing one example of the manner of coating the card by use of the system of FIG. 10; FIG. 12A and FIG. 12B are explanatory views showing another example of the manner of coating the card by use of the system of FIG. 10; FIG. 13 is a schematic side view of a fourth embodiment of the coating system of the invention; FIG. 14 is an explanatory view showing one example of the manner of coating the card by use of the system of FIG. 13; FIG. 15 is a schematic side view of a fifth embodiment of the coating system of the invention; FIG. 16 is an explanatory view showing one example of the manner of coating the card by use of the system of FIG. 15; FIG. 17 is an explanatory view showing another example of the manner of coating the card by use of the system of FIG. 15; FIG. 18 is a schematic side view of a sixth embodiment of the coating system of the invention; FIG. 19 is an explanatory view showing one example of the manner of coating the card by use of the system of FIG. 18; FIG. 20 is a schematic side view of a seventh embodiment of the coating system of the invention; FIG. 21 is a schematic side view of an eighth embodiment of the coating system of the invention; FIG. 22 is a schematic side view of a ninth embodiment of the coating system of the invention; FIG. 23 is an explanatory view showing one example of the manner of coating the card by use of the system of FIG. 22; FIG. 24 is an explanatory view showing another example of the manner of coating the card by use of the system of FIG. 22; FIG. 25 is a schematic side view of a tenth embodiment of the coating system of the invention; FIG. 26 is an explanatory view showing one example of the manner of coating the card by use of the system of FIG. 25; FIG. 27 is an explanatory view showing another example of the manner of coating the card by use of the system of FIG. 25; FIG. 28 is a schematic side view of an eleventh embodiment of the coating system of the invention; FIG. 29 is an explanatory view showing one example of the manner of coating the card by use of the system of FIG. 28; FIG. 30 is an explanatory view showing another example of the manner of coating the card by use of the system of FIG. 28; FIG. 31 is a schematic side view of a twelfth embodiment of the coating system of the invention; FIG. 32 is an explanatory view showing one example of the manner of coating the card by use of the system of FIG. 31; and FIG. 33 is an explanatory view showing another example of the manner of coating the card by use of the system of FIG. 31.

The coating system according to the present invention serves to coat all sorts of card-like information recording media such as license cards, credit cards, various member's cards, employee's cards and identification (ID) cards. The description of the invention is made here on the assumption that the information recording medium to be coated by the coating system of the invention is a plastic card, but the type and material of the recording medium to be dealt with by the system should not be understood as limitative.

Usually, various visible information data such as characters, marks, image patterns and pictures are printed on either or both the surfaces of the aforesaid card-like recording medium. There is a case that the information card is provided with a magnetic recording stripe or an optical recording domain for magnetically or optically recording information. As shown in FIG. 1A by way of example, a card C (c1, c2,...) used as the recording medium has one surface (obverse s1) printed with visible information data including a photograph, name, and identification number of a card holder, and the other surface (back s2) printed with a bar-code pattern and so on as shown in FIG. 1B. In either case, both the recording surfaces of the card are usually coated with protective films of transparent reinforced plastic for the purpose of protecting the recording surfaces and preventing the card from being falsely altered.

According to this invention, the coating on both surfaces of the card C with the protective films F can be fulfilled by use of only one coating unit 20. As conceptually illustrated in FIGS. 1A and 1B, the coating system of the invention has a single medium or card transport unit 10 for allowing the card having both surfaces printed with visible information data to be turned over upon coating the obverse s1 of the card with the protective film F by use of the aforesaid single coating unit 10, so as to coat the back surface of the card with the protective film F by the same coating unit 10.

The protective film F loaded in the coating unit 20 may be formed of a transparent hot-melt plastic film of several ten µ thickness, a reinforced plastic film having a hot-melt adhesive layer, or a reinforced plastic film having hologram patterns. Thus, by heating the film being in press contact with the recording surface of the card, the protective film F is thermally transferred to the card, thus to coat the recording surface.

As one example, the protective film F is formed like a frame substantially equal to the card in size, and carried by a ribbon-like film base B which is given in the form of a roll 22a and wound up by a roll 22b through a coating position X, as shown in FIGS. 1A and 1B.

The supply roll 22a and winding roll 22b are detachably loaded into the coating position X so as to easily exchange the protective film F. The type of the protective film F loaded can be recognized by distinguishing marks M put on the film base B by use of a film sensor 22c. The film sensor 22c has further functions of deciding the position of the film relative to the card and detecting the end of the film F.

At the coating position X, heating means 24 is placed for heating the protective film F while bring the film F in press contact with the card C and moving the film F at the same speed as the card C being forwarded, so as to thermally transfer the protective film F to the card C. The heating means 24 in this embodiment is a heating roller.

First, the card c1 having the obverse sl printed with the holder's photograph and other visible data, which faces upward, is sent toward the coating position X through the transport unit 10 as indicated by the arrow al in FIG. 1A. The card c2 sent to the coating position X is coated with the protective film F while advancing as indicated by the arrow a2. Then, the card c3 thus coated with the protective film F is sent back and turned over (card c4) by rotating the transport unit 10 as indicated by the arrow a3 in FIG. 1B. The reversed card c5 with the back surface upward is forwarded toward the coating position X and then coated there. Finally, the finished card c6 having both surfaces coated with the protective films is discharged.

As apparent from the foregoing description, according to the coating system of the present invention, both-side coating for the card can be accomplished by use of only one coating unit 20. As shown in FIG. 2, the coating system 1 of the invention generally comprises, in addition to the aforenoted transport unit 10 and coating unit 20, a medium supplying unit 30 for preparing or supplying information recording media (cards) having at least one surface printed with visible information data, and a discharge portion 40 for receiving the finished media coated with the protective films and sent out from the coating system.

The coating system of the invention may optionally include a reject portion 50 to which a fault card failing to be coated, printed or encoded is discharged, and a data encoder 60 for magnetically recording information data on the card and verifying the data recorded on the card.

The medium supply unit 30, transport unit 10, coating unit 20, and discharge portion 40 are basically arranged in order along a medium passage P, but the transport unit 10 may be positioned behind the coating unit 20, i.e. between the coating unit 20 and the discharge portion 40 as denoted by reference numeral 100 in FIG. 2.

The medium supply unit 30 may be a card stacker for storing and sending out one by one the recording media or cards toward the coating unit 20 through the transport unit 10, or other recording means such as a printer for printing information data on a blank card and giving the card thus printed to the coating unit 20. The recording means may be united with or separated from the coating unit 20.

In FIG. 3 is illustrated the first embodiment in which the medium supply unit 30 includes a card supply stacker 32, and the transport unit 10 and coating unit 20 are incorporated in a housing 70 in one body.

The card supply stacker 32 serves to store a plurality of printed cards C and send out the printed cards C one by one to the card passage P by driving a kick roller 34 disposed on the bottom of the stacker 32.

The transport unit 10 includes transporting-turning means 11 for transporting and turning over the card C. The transporting-turning means 11 comprises paired feeding rollers 12, press rollers 13 rotatably supported by a resilient holder 13a and coming in press contact with the feeding rollers 12, a rotary frame 14 rotatably holding the feeding rollers 12 and press rollers 13, driving means 16 such as a motor for rotating the feeding rollers 12 through the medium of timing belts bl and b2 and toothed wheel 15, and driving means 18 such as a motor for revolving the rotary frame 14 through the medium of a timing belt b3. The opposed feeding roller 12 and press roller 13 are opposite to each other so as to come in contact with each other on the card passage P, and an axis 14a about which the rotary frame 14 rotates is also placed on the card passage P.

With the transporting-turning means 11, the card fed from the card supply stacker 32 can be forwarded along the card passage P by driving the feeding rollers 12 in conjunction with the press rollers 13, and turned at an arbitrary angle by revolving the rotary frame 14 about the axis 14a placed on the card passage P. When driving the feeding rollers 12 to forward the card, the frame driving means 18 is at rest as illustrated in FIG. 4A. When revolving the rotary frame 14, the roller driving means 16 stops so as not to displace the card C held between the feed rollers and press rollers 13, as shown in FIG. 4B. The roller driving means 16 and frame driving means 18 are respectively separated from the rotary frame 14, so that the rotary frame 14 can be operated without decreasing its rotational performance.

In the coating unit 20, the heating roller 24 is movable up and down at the coating position X so as to advance and retreat relative to a platen roller 28a, so that the protective film F traveling from the supply roll 22a to the winding roll 22b comes in press contact with the card C at the coating position X when coating the card, and is parted from the card when the card passes by the coating position X.

The heating roller 24 is moved vertically by elevating means 26 which comprises a suspension member 26a suspended from the housing 70 by means of springs 26b, at least one cam 26c supported rotatably by the housing 70, at least one follower 26d mounted on the suspension member 26a for moving vertically the suspension member 26a following the the rotation of the cam 26c, and a blanket 26f supporting rotatably the heat roller 24, which is secured by the suspension member 26a through the medium of a resilient member 26e, as shown in FIG. 5.

By rotating the cam 26c as indicated by the arrow in FIG. 5, the follower 26d and blanket 26f move downward against the springs 26b to thrust the heat roller 24 downward, thus bringing the protective film F in press contact with the card C. At this time, the heating roller 24 is heated, consequently to thermally transfer the protective film F to the card C. Thus, the desired coating on the card is fulfilled.

The coating unit 20 further comprises a card forwarding means 28 including, in addition to the platen roller 28a, capstan rollers 28b and 28c, and feeding rollers r1 and r2, so as to forward the card C along guide members 28d and 28c. Denoted by 29 is a card sensor.

The coating system is provided with a controller 90 for operating the heating means 24 at a temperature pertinent to the protective film F loaded in the system. The type of the protective film, which is used in accordance with the material of the card or other conditions, can be automatically recognized by perceiving the mark M on the film base B as illustrated in FIG. 1A and discriminating the mark M by the controller 90, thereby to determine the pertinent temperature on the basis of heating parameters preset in the controller 90. The controller 90 has a console panel 92 for manually setting the heating parameter.

The medium discharge portion 40 includes a card discharge stacker 42 mounted outside the housing 70 and confronting a card exit 72 formed in the housing 70 on the extension of the card passage P.

The coating system of the first embodiment shown in FIG. 3 fulfills coating on both surfaces of the card C with the protective film F in the manner as illustrated in FIG. 6A and FIG. 6B. First, one printed card c11 is sent out from the card supply stacker 32 along the card passage P by rotating the kick roller 34 and forwarded to the coating position X as shown in FIG. 6A. At the coating position X, the obverse sl of the card c12 is coated with the protective film F. The coated card c13 is sent back toward the transport unit 10 as shown in FIG. 6B, and turned over (c14) by revolving the transporting-turning means 11. The card c15 with the back s2 facing upward is forwarded to the coating position X, and there, the back s2 of the card is coated. Finally, the finished card having both surfaces coated with the coating films is discharged along the card passage P to the discharge portion 40.

The transport unit 10 is placed between the supplying unit 30 and the coating unit 20 in this embodiment, but it may be placed between the coating unit 20 and the discharge portion 40, i.e. behind the coating unit 20.

FIG. 7 shows the second embodiment in which the transport unit 10 is placed behind the coating unit 20. In FIG. 7, the elements depicted by the same reference numerals with respect to those of the first embodiment described above have the same structures and functions as those of the first embodiment and will not be described in detail again.

The manner of coating both the surfaces of the card with the protective films is illustrated in FIG. 8. The card fed from the supply unit 30 is first coated on its obverse s1 with the protective film F (c21). The card with the obverse coated is forwarded to the transport unit 10 and turned upside down by the transport unit 10 (c22). The card with the back upward is sent backward (c23) until it passes through the coating position X, and reversed to be sent in the forward direction. When the card passes the coating position X, the back s2 is coated. Thus, the finished card having both surfaces coated can be obtained.

The third embodiment shown in FIG. 9 has a function of rejecting a fault card to the reject portion 50 apart from the discharge portion 40. The transport unit 10 in this embodiment includes two transporting-turning means 11a and 11b. The first transporting-turning means 11a is positioned on a first card passage P1 (equivalent to the aforesaid card passage P) which extends horizontally from the card supplying unit 30 to the card exit 72. The transport unit 10 has a second card passage P2 perpendicular to the first card passage P1. The second transporting-turning means 11b is positioned on a third card passage P3 below and parallel to the first card passage P1. The first and second transporting-turning means 11a and 11b are substantially the same as that shown in FIGS. 4A and 4B. The respective axes 14a of the first and second transporting-turning means 11a and 11b are positioned at the intersection points of the passages P1 and P2 and the passages P2 and P3.

The first and second transporting-turning means 11a and 11b are synchronously driven by the roller driving means 16 and the frame driving means 18 through the medium of timing belts b1, b2 and b3 as depicted by solid and imaginary arrows in FIG. 10, in much the same manner as shown in FIGS. 4A and 4B. In the illustrated embodiment, like component elements are denoted by the like numerical symbols in FIGS. 4A and 4B.

By operating the roller driving means 16, the respective feeding rollers 12 in the first and second transporting-turning means 11a and 11b are simultaneously rotated through the medium of the timing belts b1 and b2 and toothed wheel 15, so that the card C on the first or third card passage P1 or P3 can be forwarded. By operating the frame driving means 18, the respective rotary frames 14 in the first and second transporting-turning means 11a and 11b are synchronously revolved through the medium of the timing belt b3.

The reject portion 50 in this embodiment is disposed below the card supplying unit 30 on the extension of the third card passage P3. When a fault card is found, it is introduced along the second and third card passages P2 and P3 and discharged to the reject portion 50 by operating the first and second transporting-turning means 11a and 11b in the transport unit 10.

The coating system may include an encoder 60 for magnetically recording information data on the card C and verifying the recorded data to check whether the recorded information data are correct. If abnormality is found as the result of verifying the recorded card by the encoder 60, the fault card is discharged to the reject portion 50 through the second transporting-turning means 11b.

The order in which coating and encoding are carried out is not specifically limited, but the coating and encoding procedure shown in FIGS. 11A and 11B by way of example may be adopted. That is to say, the card C sent out from the card supply stacker 32 is first transported to the encoder 60 through the transport unit 10 as indicated by the arrows a11-a12 in FIG. 11A. At the encoder 60, the card is subjected to encoding and then sent back toward the transport unit 10 (a13). When the card is deemed improper, it is discharged as a fault card to the reject portion 50 (a14). The proper card is sent to the coating position X (a15-a16). At the coating position X, the obverse s1 of the card C is coated with the protective film, and then, sent back to the transport unit 10 (a17 in FIG. 11B). The card is turned upside down by the first transporting- turning means 11a in the transport unit 10, and forwarded to the coating position X (a18). At the coating position X, the back surface s2 of the card is coated with the protective film. Finally, the finished card is sent out to the discharge portion 40 (a19).

In FIGS. 12A and 12B is shown another manner in which the card is first fed to the coating position X as indicated by the arrow a21 in FIG. 12A, and the obverse s1 of the card is coated there. The coated card is sent back to the transport unit 10 (a22) and transported to the encoder 60 (a23-a24). Upon encoding desired data on the card, the card is fed to the coating position X (a25-a26) to coat the back s2 of the card with the protective film. The finished card coated is sent out to the discharge portion 40 (a27). When verifying the data in the encoder 60, if the data is deemed improper, the card is discharged as a fault card to the reject portion 50 as indicated by the arrow a28 in FIG. 12B.

The fourth embodiment shown in FIG. 13 has the transport unit 10 placed between the coating unit 20 and the discharge portion 40. The other structure and components are identical with those of the embodiment of FIG. 9. Accordingly, the same elements as the foregoing embodiments are given by the same reference numerals.

FIG. 14 illustrates one coating and encoding manner in the fourth embodiment, in which the card fed from the supply unit 30 is first coated on its obverse with the protective film when passing the coating position X as indicated by the arrow a31, and then, sent to the encoder 60 through the transport unit 10 (a32-a33), to encode information data on the back of the card. When finding abnormality of data encoded on the card, the card is discharged as a fault card to the reject portion 50 (a34). The proper card returns from the third passage P3 to the first passage P1 (a35-a36). Upon passing through the coating position X, the card is reversed to move in the forward direction (a37). When the card passes the coating position X, the back of the card is coated with the protective film F. Finally, the finished card coated on its both surfaces with the protective films is sent out to the discharge portion 40 (a38).

FIG. 15 shows the fifth embodiment having a function of recording information data such as characters and images. That is, the medium supplying unit 30 incorporates means for recording such visible information data on the given card. As the recording means, a printer may be used as illustrated.

To be more specific, the medium or card supplying unit 30 in this embodiment comprises a card stacker 36 for stacking and sending out one by one blank cards, and a printing unit 80. The card stacker 36 has a kick roller 38 for sending out the blank cards one by one to the card passage P.

The printing unit 80 in this embodiment is of a thermal transfer type using a thermal transfer ink ribbon applied with one or more color inks, but the type of the printing unit is not specifically limited. The printing unit 80 comprises an ink ribbon cartridge 81 containing a supply roll 81a of ink ribbon R and a winding roll 81b, a platen roller 82 located at a printing position PX on the passage P, a thermal head 83 which brings the ink ribbon R in press contact with the blank card on the platen roller 82 while being heated to thermally transfer the black or color ink to the card, and means for vertically moving the thermal head 83. Before and behind the platen roller 82, there are disposed capstan rollers 85 and 86 along the card passage P.

Printing of desired images such as characters, marks and photographs on one surface of the card is fulfilled by pressing the ink ribbon R against the card with the heating thermal head while moving the card and ink ribbon R at the same speed. The other component elements and structure than the printing unit 80 in this embodiment are much the same as those of the foregoing embodiments. Therefore, the description of these component elements is omitted below to avoid repetition.

The card having one surface printed by the printing unit 80 can be subjected to printing on the other surface thereof by utilization of the transport unit 10 as illustrated in FIG. 16 by way of example. That is, the blank card is first fed from the card stacker 36 to the printing position PX in the medium supplying unit 30 as indicated by the arrow a41 in FIG. 16, and the obverse of the card is printed by the printing unit 30. The card having the obverse printed is forwarded to the transport unit 10 (a42), and turned upside down there (a43). The reversed card with the back upward is sent back until passing through the printing position PX and then reversed (a44). When the card goes through the printing position PX in the forward direction, the back of the card is printed. The card thus printed on both surfaces is sent to the coating position X through the transport unit 10 (a45). At the coating position X, the back of the card is coated with the protective film F. The card thus coated is sent back to the transport unit 10 (a46), and turned upside down to cause the obverse of the card to face upward (a47). The card with the obverse upward is forwarded and, the obverse of the card is coated when the card passes the coating position X. The finished card printed and coated on both surfaces thereof is sent out to the discharge portion 40 (a48).

FIG. 17 shows another printing and coating procedure by use of the fifth embodiment of FIG. 15. As illustrated, the card is first fed from the card supply stacker 36 to the printing position PX (a51), and there, the obverse of the card is printed. Then, the card with the obverse printed is forward to the coating position X through the transport unit 10 (a52), and there, the obverse of the card is coated. The card with the obverse printed and coated is sent back to the transport unit 10. In the transport unit 10, the card is turned upside down by the transporting-turning means 11 (a54) and sent backward through the printing position PX. Upon passing through the printing position PX, the card is reversed to be sent forward (a55). When the card with the back upward passes the printing position PX, the back of the card is printed. The card thus printed is forwarded to the coating position X through the transport unit 10 (a56), and there, the back of the card is coated. Finally, the finished card printed and coated is sent out to the discharge portion 40.

In the sixth embodiment shown in FIG. 18, the transport unit 10 is placed behind the coating unit 20. The other structure and component elements are identical with those of the fifth embodiment of FIG. 15. Therefore, the description of these component elements is omitted below to avoid repetition.

In FIG. 19 is shown one coating and printing procedure in the sixth embodiment. As illustrated, the card from the supply stacker 36 is forwarded from the printing position PX to the coating position X. When passing through the printing position PX and the coating position X, the obverse of the card is printed and coated. Then, the card is turned upside down by the transporting-turning unit 11, and sent backward until passing through the printing position PX. Thereafter, the card with the back upward is again reversed to be sent in the forward direction, and then, when the card passes the printing position PX and the coating position X, the back of the card is printed and coated, respectively. Finally, the finished card printed and coated is sent out to the discharge portion 40.

FIG. 20 shows the seventh embodiment in which the medium supplying unit 30 is separated from the transport unit 10 and the coating unit 20. That is, the medium supplying unit 30 is contained in an individual housing 70a separated from a housing 70b equivalent to the housing 70 in the foregoing embodiments.

Other structure and component elements are identical to those in the aforementioned fifth embodiment. Therefore, the elements depicted by the same reference numerals with respect to those of the foregoing embodiments have the same structures and functions as those of the foregoing embodiment and will not be described in detail again.

Incidentally, the medium supplying unit 30 contained in the housing 70a comprises the card supplying stacker 36 for stacking and sending out blank cards one by one, and the printing unit 80. In the housing 70b, the transport unit 10 including the transporting-turning means 11 and the coating unit 20 are arranged in order along the card passage P.

The eighth embodiment shown in FIG. 21 has a modified arrangement based on the aforementioned seventh embodiment of FIG. 20, in which the coating unit 20 and the transport unit 10 including the transporting-turning means 11 are arranged in order along the card passage P. That is, the order of coating unit 20 and transport unit 10 in this embodiment is reverse to that of FIG. 20, but other structure and components elements are identical with those of the seventh embodiment of FIG. 20. Therefore, the description of these component elements is omitted below to avoid repetition.

Also, the ninth embodiment shown in FIG. 22 is substantially the same in structure as the seventh and eighth embodiments described above, except the position of the transport unit 10. That is to say, the transport unit 10 in this embodiment is contained in the housing 70a along with the card stacker 36 and the printing unit 30. The transport unit 10 is placed on the passage P behind the printing unit 30. Other structure and component elements are identical to those in the aforementioned embodiments shown in FIG. 20 and FIG. 21. Therefore, the elements depicted by the same reference numerals with respect to those of the foregoing embodiments have the same structures and functions as those of the foregoing embodiment and will not be described in detail again.

The card may be subjected to desired printing and coating in the manners as shown in FIG. 23 and FIG. 24 by way of example. In the manner of FIG. 23, both the surfaces of the given card are first printed at the printing position PX, and next, both the surfaces of the card are coated at the coating position X. Alternatively, the obverse of the card is first printed and coated, and thereafter, the card is turned upside down by the transporting-turning means 11 in the transport unit 10 when being sent back, so that the back of the card is printed and coated while being sent in the forward direction, as illustrated in FIG. 24.

In the tenth embodiment of FIG. 25, the transport unit 10 is placed between the card stacker 36 and the printing unit 80. Other structure and component elements are identical to those in the ninth embodiment of FIG. 22. Therefore, the elements depicted by the same reference numerals with respect to those of the foregoing embodiments have the same structures and functions as those of the foregoing embodiment and will not be described in detail again.

The printing and coating on the given card are fulfilled in some manners as shown in FIG. 26 and FIG. 27, for instance. The manner shown in FIG. 26 effects first both-surface printing and secondly both-surface coating. That is, the blank card fed from the supply stacker 36 is forwarded to the printing position PX in the printing unit 80 through the transport unit 10, to first print the obverse of the card there. The card with the obverse printed is sent backward to the transport unit 10, to turn the card upside down by the transporting-turning means 11, and then, again sent in the forward direction to the printing position PX, the print the back of the card. The card thus printed is sent to the coating unit 20 in the housing 70b, to coat the back of the card at the coating position X, and sent back to the transport unit 10 through the printing unit 80, to be turned upside down there. The card with the obverse upward is again sent to the coating position X to coat the obverse of the card. Finally, the finished card printed and coated is discharged to the discharge portion 40.

In the manner shown in FIG. 27, the card fed from the card stacker 36 is forwarded along the passage P through the printing unit 80 and the coating unit 20, to print and coat the obverse of the card at the printing position PX and the coating position X. The card with the obverse printed and coated is sent back to the transport unit 10, to be turned over by the transporting-turning means 11. The card with the back upward is again forwarded through the printing unit 80 and the coating unit 20, to print and coat the back of the card at the printing position PX and the coating position X. Finally, the finished card printed and coated is discharged to the discharge portion 40.

The eleventh embodiment shown in FIG. 28 is substantially equivalent to the embodiment of FIG. 9. Strictly speaking, this embodiment of FIG. 28 is much the same as that of FIG. 9, except that the medium supplying unit 30 includes the printing unit 80 and blank-card supplying stacker 38 seen in the embodiment of FIG. 15, and that the housing 70 is divided into two housings 70a and 70b. Namcly, the housing 70a accommodates the medium supplying unit 30 comprising the printing unit 80 and the card supplying stacker 38, the transport unit 10 placed behind the printing unit 80, and the encoder 60. The transport unit 10 includes the first transporting-turning means 11a on the first passage P1 and the second transporting-turning means 11b on the third passage P3, similarly to the embodiment of FIG. 9. On the extension of the third passage P3, there is the reject portion 50 for rejecting a fault card thereto, if any. The above and other component elements and structure are identical with those of the foregoing embodiments. Therefore, the description of these component elements is omitted below to avoid repetition.

The desired printing, coating and encoding are carried out by this embodiment in some manners as shown in FIG. 29 and FIG. 30 by way of example. In the manner shown in FIG. 29, there are executed, in order, printing on the obverse of the card at the printing position PX, encoding at the encoder 60, printing on the back of the card at the printing position PX, coating on the back of the card at the coating position X, and coating on the obverse of the card at the coating position X. Turning-over of the card is effected by the transport unit 10 including the first and second transporting-turning means 11a and 11b.

Printing and coating on the obverse of the card may be first executed as shown in FIG. 30. Then, the card with the obverse printed and coated is sent to the encoder 60 through the transport unit 10 to magnetically record information data on the card. When finding a fault card as the result of verifying at the encoder 60, the fault card is discharged to the reject portion 50. The proper card is sent back to the printing position PX upon turning over the card by the transport unit 10. The card sent to the printing position PX is printed on the back thereof, and then forwarded to the coating position X through the transport unit 10. At the coating position X, the back of the card is coated with the protective film. Finally, the card thus printed, encoded and coated is sent out to the discharge portion 40, as illustrated.

The twelfth embodiment of FIG. 31 is substantially equivalent to that of FIG. 28, except that the transport unit 10 is placed between the card stacker 36 and the printing unit 80. Other structure and component elements are identical to those in the aforementioned fifth embodiment. Therefore, the elements depicted by the same reference numerals with respect to those of the foregoing embodiments have the same structures and functions as those of the foregoing embodiment and will not be described in detail again.

Printing, encoding and coating the card are carried out in some manners. For example, as shown in FIG. 32, printing and coating on the obverse of the card are first executed at the printing position PX and the coating position X, respectively, and thereafter, printing and coating on the back of the card is effected upon encoding the card at the encoder 60, as illustrated. In another manner as shown in FIG. 33, encoding is first effected at the encoder 60, and thereafter, printing and coating on both surfaces of the card are carried out at the printing position PX and the coating position X, respectively. Either way, turning-over of the card is performed by the transporting-turning means 11a and 11b in the transport unit 10. The finished card printed, encoded and coated is sent out to the discharged portion 40, but a fault card, if possibly found at the encoder 60, is discharged to the reject portion 50.

As is apparent from the foregoing description, according to the coating system of the present invention, both the recording surfaces of information recording media of various types such as identification cards and credit cards can be automatically coated with protective films by only one coating unit with high efficiency. Furthermore, the coating system of the invention enables not only both-surface coating and printing of the given card, but also encoding with information data, and has a function of verifying the card being processed and rejecting a fault card if any. Thus, safe and reliable identification cards of various sorts, which are protected by the protective films, can be rationally mass-produced with high precision at a low cost. Moreover, since the housing containing the constituent elements of the invention can be divided into two housings, one accommodating the card supplying unit such as the printing unit, and other housing accommodating the coating unit, there can be provided a serviceable coating system applicable to a recording unit such as an individual printer and various information processing devices including a ticketing machine.

## Claims

1. A coating system for information recording media, which comprises a medium supplying unit (30) for sending out recording media one by one to a medium passage (P), and one coating unit (20) for coating one recording surface of the recording medium given from said medium supplying unit (30) with a protective film (F), characterised in that a transport unit (10) including at least one means (11,11a,11b) for transporting and turning the recording medium is disposed in said coating system.

2. A coating system as claimed in claim 1, wherein said transport unit (10) is placed on said medium passage (P) between said medium supplying unit (30) and said coating unit (20).

3. A coating system as claimed in claim 1, wherein said transport unit (10) is placed on said medium passage (P) behind said coating unit (20).

4. A coating system as claimed in any of the preceding claims, wherein said protective film (F) is made of a transparent hot-melt plastic film, a reinforced plastic film having a hot-melt adhesive layer, or a reinforced plastic film having hologram patterns, and said coating unit (20) includes means (24) for heating said protective film (F) so as to thermally transfer said protective film (F) onto said medium, and means (26) for vertically elevating said heating means (24) so as to bring said protective film (F) in press contact with said medium by said heating means (24) when coating said protective film (F) on said medium.

5. A coating system as claimed in any of the preceding claims, wherein said transport unit (10) having at least one transporting-turning means (11,11a,11b) comprises paired feeding rollers, press rollers, rotatably supported and coming in press contact with said feeding rollers, a rotary frame rotatably holding said feeding rollers and press rollers, driving means (16) for rotating said feeding rollers, and driving means (18) for revolving said rotary frame.

6. A coating system as claimed in any of the preceding claims, further comprising an encoder (60) for magnetically recording information data on the medium and verifying the information data recorded on said medium.

7. A coating system as claimed in any of the preceding claims, further comprising a reject portion (50) for receiving a fault medium.

8. A coating system as claimed in any of the preceding claims, wherein said medium supplying unit (30) includes a printing unit (80) for printing information data on one recording surface of the medium.

9. A coating system as claimed in claim 8, wherein said printing unit (80) is separated from said coating unit (20).

10. A coating system for information recording media, which comprises a medium supplying unit (30) for sending recording media one by one to a first medium passage (P1), one coating unit (20) disposed on said first medium passage (P1) for coating one recording surface of the recording medium given from said medium supplying unit (30) with a protective film (F), and a discharge portion (40) for receiving the medium coated by said coating unit (20), characterised in that said coating system further comprises a transport unit (10) including first and second means (11a,11b) for transporting and turning the recording medium, and first and second transporting-turning means (11a,11b) being arranged on a second medium passage (P2) perpendicular to said first medium passage (P1), an encoder (60) disposed on a third medium passage (P3) for magnetically recording information data on the medium and verifying the information data recorded on said medium, and a reject portion (50) disposed on said third medium passage (P3) for receiving a fault medium.

11. A coating system as claimed in claim lo, wherein said transport unit (10) is placed between said medium supplying unit (30) and said coating unit (20).

12. A coating system as claimed in claim 10, wherein said transport unit (10) is placed behind said coating unit (20).

13. A coating system as claimed in any of claims 10 to 12, wherein said protective film (F) is made of a transparent hot-melt plastic film, a reinforced plastic film having a hot-melt adhesive layer, or a reinforced plastic film having hologram patterns, and said coating unit (20) includes means (24) for heating said protective film (F) so as to thermally transfer said protective film (F) onto said medium, and means (26) for vertically elevating said heating means (24) so as to bring said protective film (F) in press contact with said medium by said heating means (24) when coating said protective film (F) on said medium.

14. A coating system as claimed in any of claims 10 to 13, wherein said transporting-turning means (11a,11b) each comprises paired feeding rollers, press rollers rotatably supported and coming in press contact with said feeding rollers, a rotary frame rotatably holding said feeding rollers and press rollers, driving means (16) for rotating said feeding rollers, and driving means (18) for revolving said rotary frame.

15. A coating system for information recording media, which comprises a medium supplying unit (30) including a printing unit (80) for printing information data on one recording surface of the medium, and one coating unit (20) for coating one recording surface of the recording medium given from said medium supplying unit (30) with a protective film (F), characterised in that said coating system further comprises a transport unit (10) including at least one means (11,11a,11b) for transporting and turning the recording medium, and a discharge portion (40) for receiving the medium coating by said coating unit (20).

16. A coating system as claimed in claim 15, further comprising an encoder (60) for magnetically recording information data on the medium and verifying the information data recorded on said medium.

17. A coating system as claimed in claim 15 or claim 16, further comprising a reject portion (50) for receiving a fault medium.

18. A coating system as claimed in any of claims 15 to 17, further comprising an encoder (60) for magnetically recording information data on the medium and verifying the information data recorded on said medium, and a reject portion (50) for receiving a fault medium.

19. A coating system for information recording media, which comprises a medium supplying unit (30) including a printing unit (80) for printing information data on one recording surface of the medium, and one coating unit (20) for coating one recording surface of the recording medium given from said medium supplying unit (30) with a protective film (F), characterised in that said coating system further comprises a transport unit (10) including at least one means (11,11a,11b) for transporting and turning the recording medium, a discharge portion (40) for receiving the medium coated by said coating unit (20), a first housing (70a) accommodating said medium supplying unit (30), and a second housing (70b) accommodating said coating unit (20), discharge portion (40) and transport unit (10).

20. A coating system as claimed in claim 19, further comprising an encoder (60) for magnetically recording information data on the medium and verifying the information data recorded on said medium, and a reject portion (50) for receiving a fault medium, said encoder (60) and reject portion (50) being contained in said first housing (70a).

21. A coating system as claimed in claim 19 or claim 20, further comprising an encoder (60) for magnetically recording information data on the medium and verifying the information data recorded on said medium, and a reject portion (50) for receiving a fault medium, said encoder (60) and reject portion (50) being contained in said second housing (70b).

22. A coating system for information recording media, which comprises a medium supplying unit (30) including a printing unit (80) for printing information data on one recording surface of the medium, and one coating unit (20) for coating one recording surface of the recording medium given from said medium supplying unit (30) with a protective film (F), characterised in that said coating system further comprises a transport unit (10) including at least one means (11,11a,11b) for transporting and turning the recording medium, a discharge portion (40) for receiving the medium coated by said coating unit (20), a first housing (70a) accommodating said medium supplying unit (30) and said transport unit (10), and a second housing (70b) accommodating said coating unit (20) and said discharge portion (40).

23. A coating system as claimed in claim 22, further comprising an encoder (60) for magnetically recording information data on the medium and verifying the information data recorded on said medium, and a reject portion (50) for receiving a fault medium, said encoder (60) and reject portion (50) being contained in said first housing (70a).

24. A coating system as claimed in claim 22 or claim 23, further comprising an encoder (60) for magnetically recording information data on the medium and verifying the information data recorded on said medium, and a reject portion (50) for receiving a fault medium, said encoder (60) and reject portion (50) being contained in said second housing (70b).
